# FASCICULE DE BREVET EUROPEEN

(11) **EP 1 800 917 B1**
(45) Date de publication et mention de la délivrance du brevet: **30.12.2009**
(21) Numéro de dépôt: 06125359.7
(22) Date de dépôt: 04.12.2006
(51) Int. Cl.: B60H 1/00

(54) **Dispositif de chauffage, ventilation et/ou climatisation de véhicule comprenant un groupe moto-ventilateur démontable**
Fahrzeug-Klimaanlage mit einer demontierbaren Gebläseeinheit
Vehicle air conditioner comprising a demountable blower unit

(30) Priorité: 22.12.2005 FR 0513110
(43) Date de publication de la demande: 27.06.2007
(73) Titulaire: Valeo Systèmes Thermiques, 78321 Le Mesnil St Denis Cedex (FR)
(72) Inventeur: Pierres, Philippe, 78990, Elancourt (FR); Lebecq, Olivier, 78390, Bois d'Arcy (FR); Dubois, Christian, 78610, Le Perray en yvelines (FR); Longatte, Florent, 78120, Rambouillet (FR)

(56) Documents cités:
- EP-A- 0 595 336
- EP-A- 0 867 319
- DE-A1- 19 906 537
- US-A- 6 110 035

## Description

L'invention se rapporte au domaine des dispositifs de chauffage, ventilation et/ou climatisation pour véhicules automobiles.

Elle concerne plus particulièrement un dispositif comprenant un boîtier délimitant une enveloppe, ainsi qu'un groupe moto-ventilateur propre à être reçu de manière amovible dans l'enveloppe dans une position de montage, ce groupe moto-ventilateur comprenant un moteur électrique entraînant deux turbines disposées suivant l'axe du moteur et de part et d'autre de celui-ci, ces turbines étant propres à être reçues dans deux volutes formées dans l'enveloppe.

Un tel boîtier loge les différents composants du dispositif et notamment un groupe moto-ventilateur, encore appelé pulseur ou soufflante, qui est destiné à envoyer dans l'habitacle du véhicule un flux d'air prélevé à l'extérieur et/ou à l'intérieur de l'habitacle.

Dans un dispositif du type précité, le groupe moto-ventilateur comporte une ou deux turbines entraînées en rotation par le moteur électrique et propres à pulser le flux d'air par effet centrifuge à l'intérieur des deux volutes que forme l'enveloppe. En sortie des volutes, le flux d'air traverse différents composants pour pouvoir être traité avant d'être envoyé dans l'habitacle par différentes buses de sortie.

Le boîtier loge en outre différents composants, généralement un filtre à air, un évaporateur (dans le cas où le dispositif permet de délivrer un air climatisé), radiateur de chauffage, différents volets de répartition ou de distribution.

Un tel boîtier doit comporter des moyens pour permettre le montage du groupe moto-ventilateur, mais aussi et surtout son démontage, si une intervention sur celui-ci est nécessaire. Un tel boîtier est notamment connu de EP 0 867 319. Par ailleurs, un dispositif similaire est enseigné par EP 1 731 339, relevant de l'Art. 54.3 CBE.

Dans le groupe moto-ventilateur comportant deux turbines, ce démontage s'effectue en démontant une partie de l'enveloppe du boîtier, par exemple la volute, pour permettre de sortir le groupe moto-ventilateur par un déplacement dans une direction radiale. Lors de cette phase de démontage l'axe du moteur et des turbines reste parallèle à lui-même. Ce démontage nécessite aussi de démonter, généralement, une partie au moins de la planche de bord du véhicule, ce qui augmente le temps et donc le coût des interventions.

L'invention a précisément pour objet un dispositif de chauffage, ventilation et/ou climatisation de véhicule automobile selon la revendication 1 qui permet de remédier à de tels inconvénients.

Conformément à l'invention, le boîtier comporte une ouverture d'accès située latéralement dans une région d'extrémité de l'enveloppe et dans la direction d'un axe de montage qui correspond à l'axe commun du moteur électrique et des turbines, ce qui permet un montage ou démontage du groupe moto-ventilateur suivant une direction axiale correspondant à cet axe commun.

Selon l'invention , l'enveloppe du boîtier délimite en outre une partie réceptrice, comprise entre les deux volutes, et propre à recevoir, dans la position de montage, un support moteur de forme générale annulaire qui entoure le moteur électrique.

De ce fait, le montage ou le démontage du groupe moto-ventilateur s'effectue simplement par déplacement axial, dans la direction de l'axe du moteur et des turbines, sans avoir à démonter l'enveloppe du boîtier et tout ou partie de la planche de bord du véhicule.

Ceci simplifie grandement les opérations d'intervention, notamment pour l'entretien ou le remplacement du groupe moto-ventilateur.

L'ouverture d'accès est formée avantageusement dans une entrée d'air de l'une des deux volutes. Cette entrée d'air peut être munie d'un conduit d'admission d'air qui doit être alors réalisé démontable pour le montage ou le démontage du groupe moto-ventilateur.

Dans ce cas, l'autre des deux volutes sera généralement munie d'un autre conduit d'admission d'air, réalisé fixe.

De façon avantageuse, la partie réceptrice et le support moteur comportent des moyens conjugués de verrouillage par coopération de forme.

Les moyens conjugués de verrouillage sont, par exemple, du type à baïonnette. Dans ce mode de réalisation, ces moyens peuvent comprendre au moins un ergot issu du support moteur et propre à s'engager dans une découpe aménagée dans une paroi intérieure de la partie réceptrice.

Dans une réalisation avantageuse de l'invention, le support moteur comprend deux parties en forme de demi-anneaux propres à être assemblées entre elles et autour d'une bague entourant le moteur électrique. De préférence, la bague entoure le moteur électrique et comporte des amortisseurs surmoulés pour le montage du support moteur.

Pour le raccordement électrique, l'invention prévoit que le dispositif comprend un premier connecteur électrique porté par le support moteur et un second connecteur électrique porté par le boîtier et propres à assurer une liaison électrique lorsque le groupe moto-ventilateur est dans la position de montage à l'intérieur du boîtier.

Dans une forme de réalisation, le premier connecteur électrique et le second connecteur électrique comprennent des contacts électriques du type frotteur.

Ainsi, le premier connecteur électrique peut comprendre au moins un contact électrique mâle du type à baïonnette, tandis que le second connecteur électrique peut comprendre au moins un contact électrique femelle du type à baïonnette.

En variante, le premier connecteur électrique et le second connecteur électrique peuvent former en même temps des moyens de verrouillage pour maintenir le groupe moto-ventilateur dans la position de montage à l'intérieur du boîtier.

Dans la description qui suit, faite seulement à titre d'exemple, on se réfère aux dessins annexés, sur lesquels :
- la figure 1 est une vue en perspective d'un boîtier d'un dispositif de chauffage, ventilation et/ou climatisation de l'invention, dans lequel le groupe moto-ventilateur est représenté dans une position d'extraction dans la direction axiale;
- la figure 2 est une vue partielle en perspective de l'enveloppe du boîtier destiné à loger le groupe moto-ventilateur;
- la figure 3 est une vue en perspective du groupe moto-ventilateur;
- la figure 4 est une vue en perspective d'une bague propre à entourer le moteur électrique du groupe moto-ventilateur;
- la figure 5 est une vue en perspective éclatée montrant l'assemblage des deux parties du support moteur autour de la bague du groupe moto-ventilateur;
- la figure 6 est une vue en perspective analogue à la figure 1 représentant un conduit d'air en cours de démontage ;
- la figure 7 est une vue en perspective partielle montrant l'extraction du groupe moto-ventilateur au moyen d'un outil;
- la figure 8 est une vue en perspective d'un groupe moto-ventilateur dont le connecteur électrique comporte deux contacts du type frotteur ;
- la figure 9 est une vue en perspective d'une partie de l'enveloppe qui comporte un connecteur électrique comportant des contacts du type frotteur propres à coopérer avec des contacts du type frotteur du groupe moto-ventilateur de la figure 8 ; et
- la figure 10 est une vue analogue à la figure 8 dans une variante de réalisation où le connecteur électrique comprend des contacts électriques formant également moyens de verrouillage.

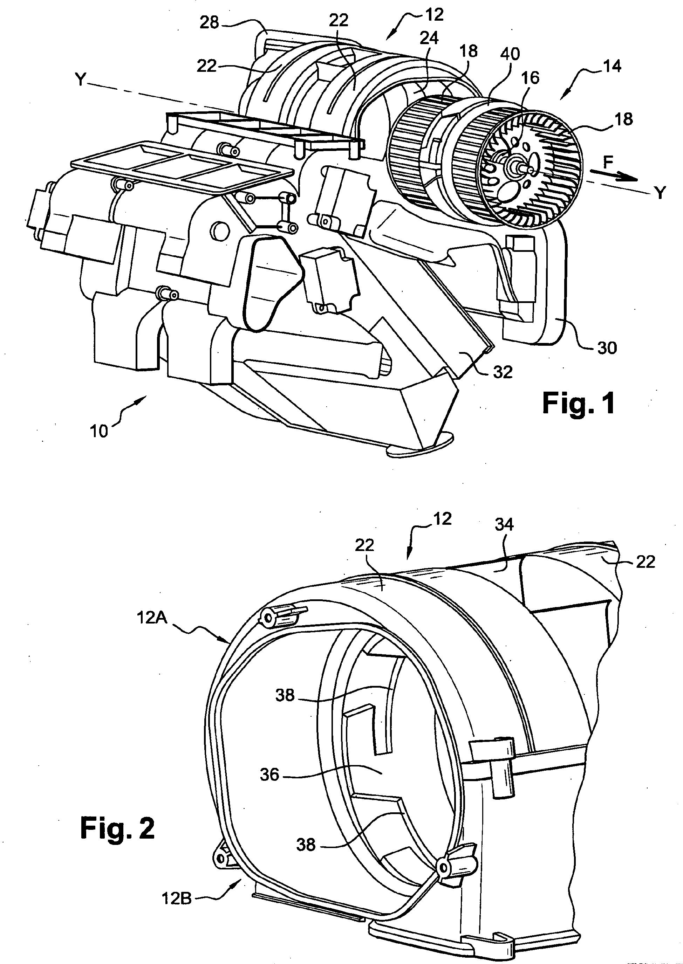

La figure 1 représente un boîtier 10 d'un dispositif de chauffage, ventilation et/ou climatisation de véhicule automobile. Un tel boîtier est propre à être implanté dans la structure du véhicule, généralement dans l'habitacle d'un véhicule automobile. La structure générale du dispositif ne sera pas décrite en détail, s'agissant de caractéristiques en elles-mêmes connues.

Le boîtier 10 comporte, en partie supérieure, une enveloppe 12, ainsi qu'un groupe moto-ventilateur 14 propre à être reçu de manière amovible dans l'enveloppe dans une position de montage. Le groupe moto-ventilateur 14 comprend un moteur électrique central 16 (non visible sur le dessin) entraînant deux turbines 18 disposées sur l'axe ou arbre 20 du moteur et de part et d'autre de ce dernier. Les turbines 18 sont propres à être reçues respectivement dans deux volutes 22 de l'enveloppe 12 qui permettent un guidage et une accélération d'un flux d'air lorsque les turbines sont entraînées en rotation par le moteur.

Le boîtier 10 comporte une ouverture d'accès 24 située latéralement dans une région d'extrémité de l'enveloppe 12 et dans la direction d'un axe de montage YY qui correspond à l'axe commun de l'arbre 20 du moteur électrique 16 et des turbines 22. Le groupe moto-ventilateur 14 peut ainsi être monté, mais surtout démonté par un déplacement axial dans la direction de l'axe YY qui correspond à la direction axiale de l'arbre du moteur 16. Sur la figure 1, le groupe moto-ventilateur 14 est représenté dans une position en cours d'extraction, cette opération d'extraction s'effectuant dans la direction de la flèche F, suivant l'axe YY.

Dans l'exemple, cet axe YY s'étend dans une direction transversale et horizontale du véhicule, c'est-à-dire perpendiculairement à l'axe longitudinal du véhicule, communément appelé axe XX.

L'ouverture d'accès 24 constitue ici l'entrée d'air de l'une des deux volutes 22, figurant du côté droit du boîtier 10 selon l'exemple décrit en figure 1, tandis que l'autre volute 22 est également munie d'une entrée d'air analogue.

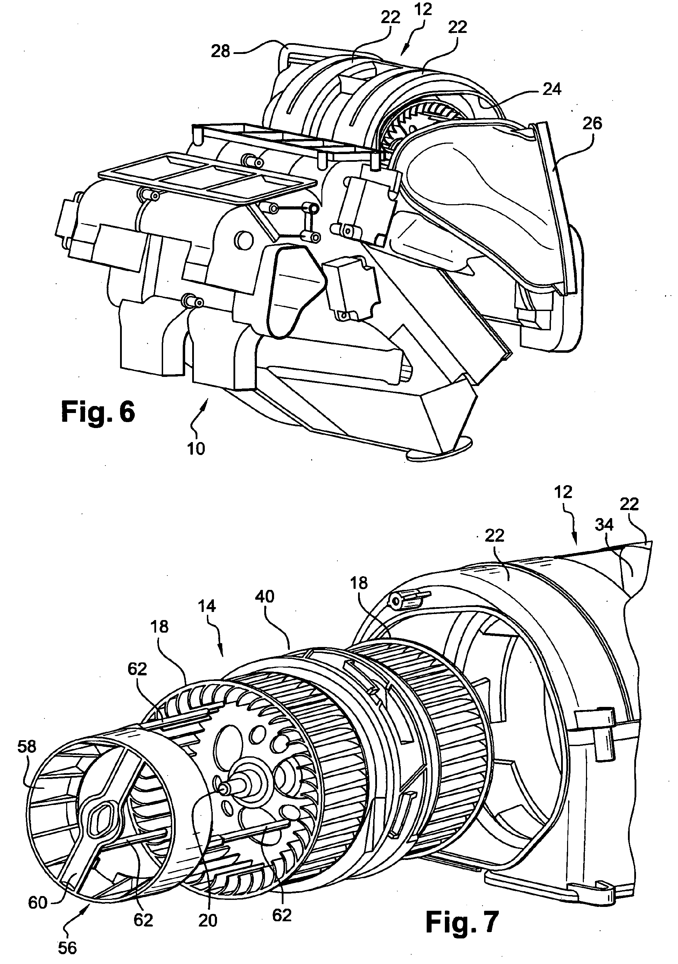

L'ouverture d'accès 24, formant entrée d'air, est munie d'un conduit d'admission d'air 26, tel que présenté en figure 6, réalisé démontable pour permettre le montage ou démontage du groupe moto-ventilateur 14. En revanche, l'autre des deux volutes 22 est munie d'un conduit d'admission d'air 28 qui est réalisé fixe, comme illustré sur les figures 1 et 6.

Sur la figure 1, le dispositif est représenté avec le conduit d'admission d'air 26 enlevé pour permettre le montage ou le démontage du groupe moto-ventilateur 14.

On peut concevoir, en variante, que ce conduit 28 soit également réalisé démontable pour permettre le montage ou le démontage du groupe moto-ventilateur 14 suivant l'un ou l'autre des côtés du boîtier. Généralement, cette opération s'effectuera sur un côté choisi, par exemple le côté droit ou le côté gauche du boîtier 10.

Ainsi, un flux d'air prélevé dans l'habitacle et/ou à l'extérieur du véhicule est admis dans l'enveloppe au travers des conduits 26 et 28, accéléré dans les volutes 22 par les turbines respectives 18 et pulsé hors du boîtier 10 via un conduit de sortie 30 présentant un contour de forme générale rectangulaire.

On aperçoit également sur la figure 1 une trappe 32 qui permet d'accéder à un filtre à air pour son remplacement.

On se réfère maintenant à la figure 2 pour décrire plus particulièrement la structure de l'enveloppe 12. Cette dernière est formée de deux parties 12A et 12B situées respectivement en partie supérieure et en partie inférieure et réalisées par moulage. Ces deux parties sont assemblées entre elles lors de l'assemblage du boîtier 10. Cet assemblage est réalisé par clipage des deux parties entre elles ou par des moyens analogies tel que le visage, le collage, ... Toutefois, ces deux parties n'ont pas à être séparées l'une de l'autre lors des opérations d'entretien, puisque le groupe moto-ventilateur 14 est prévu pour être monté ou démonté dans la direction axiale.

L'enveloppe 12 délimite une partie réceptrice 34 qui est comprise entre les deux volutes 22 et qui comporte une paroi intérieure 36 de forme générale cylindrique circulaire dans laquelle sont aménagées une pluralité de découpes 38, encore appelées 'rampes', par exemple en forme de L, propres à assurer, le montage du groupe moto-ventilateur 14 dans une position de montage par un verrouillage du type baïonnette ou analogue. La paroi intérieure 36 s'étend suivant un diamètre qui est plus petit que la dimension transversale, d'évolution variable, de chacune des volutes pour constituer une partie plus étroite de l'enveloppe 12.

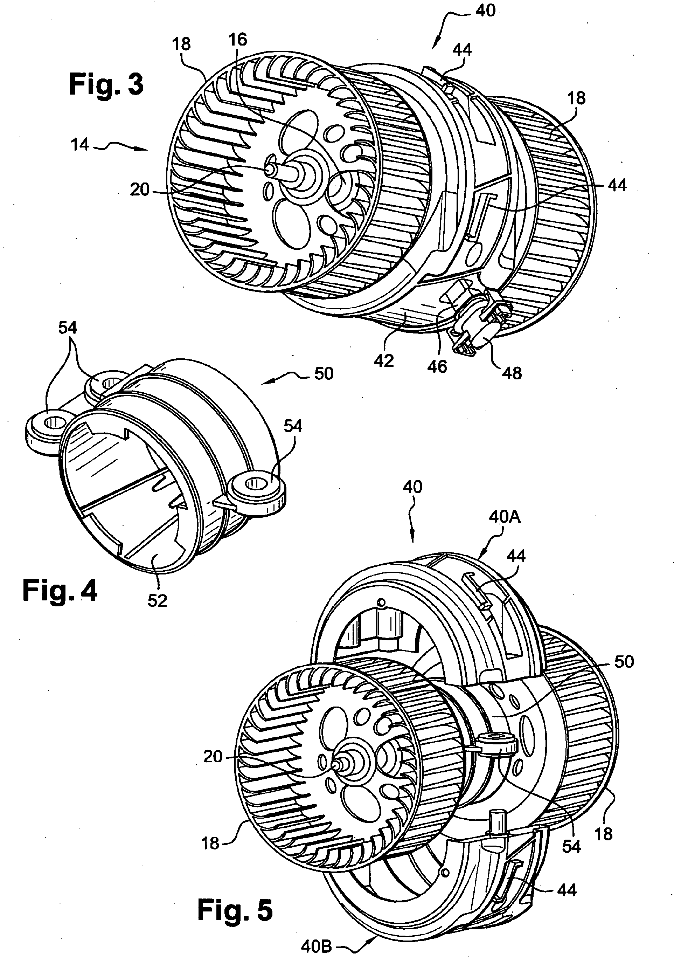

On se réfère maintenant à la figure 3 qui représente le groupe moto-ventilateur 14 seul. Le groupe moto-ventilateur 14 comprend un support moteur 40 de forme générale annulaire qui entoure le moteur électrique 16 (non visible sur le dessin) et qui est disposé entre les deux turbines 18. Le support moteur 40 comporte une paroi extérieure 42 de forme générale cylindrique circulaire dont le diamètre est supérieur au diamètre des turbines 18, mais inférieur au diamètre de la paroi intérieure 36. À la périphérie de la paroi extérieure 42 sont formés des ergots 44 en saillie propres à coopérer respectivement avec les découpes 38, par exemple en forme de L, de la partie réceptrice 34 de l'enveloppe, tel que présentée en figure 2.

On comprendra que, pour le montage du groupe moto-ventilateur 14 à l'intérieur de l'enveloppe 12, l'arbre 20 est déplacé dans la direction axiale YY' jusqu'à ce que les ergots 44 issus du support moteur 40 viennent se présenter dans les découpes respectives 38, un verrouillage définitif étant obtenu par rotation du support moteur dans l'enveloppe suivant une fraction de tour, par exemple un quart de tour, dans un sens donné. Autrement dit, on réalise ainsi un verrouillage du type baïonnette ou fraction de tour.

Bien entendu, pour démonter le groupe moto-ventilateur 14, il suffit d'abord de déverrouiller le blocage en rotation puis de faire tourner le support moteur 40 d'une fraction de tour en sens inverse pour permettre ensuite son extraction dans la direction axiale.

Comme on le voit également sur la figure 3, le support moteur 40 comporte un premier connecteur électrique 46 relié au moteur électrique et un second connecteur électrique 48 qui, normalement, est porté par le boîtier et plus particulièrement par la partie réceptrice 34 de ce dernier. Sur la figure 3, les deux connecteurs 46 et 48 sont représentés dans la position de contact qu'ils assument normalement lorsque le groupe moto-ventilateur 14 est logé dans l'enveloppe 12 du boîtier 10.

De manière générale, la partie réceptrice 34 et le support moteur 40 comportent des moyens conjugués de verrouillage par coopération de forme. Il peut s'agir de moyens du type à baïonnette, comme décrit précédemment, ou encore d'autres moyens mécaniques assurant un blocage en position voulue du support moteur par rapport à la partie intermédiaire de l'enveloppe 12.

La figure 4 représente une bague 50 conçue pour être prise en sandwich entre le moteur électrique 16 et le support moteur 40. La bague 50 est montée autour du moteur électrique 16 et est réalisée avantageusement en matière plastique. Elle comporte une paroi cylindrique 52 de section générale circulaire et des amortisseurs 54, ici au nombre de trois, pour assurer le montage du support moteur 40 dans des conditions propres à amortir les vibrations du moteur.

Comme on le voit plus particulièrement sur la figure 5, le support moteur 40 comprend deux parties 40A et 40B, chacune en forme de demi-anneau, propres à être assemblées entre elles et autour de la bague 50 qui entoure le moteur électrique 16. On aperçoit également sur la figure 5 les ergots 44 assurant le verrouillage du support moteur dans l'enveloppe du boîtier. De préférence, ces ergots sont disposés à des intervalles angulaires différents pour constituer un moyen de détrompage afin que le connecteur électrique 46 se trouve dans une position bien définie une fois le groupe moto-ventilateur 14 installé dans l'enveloppe 12.

Il est important que le support moteur 40 se trouve placé dans une position déterminée pour assurer une coopération entre les moyens de connexion électrique. Ainsi ces moyens peuvent être placés en partie inférieure du boîtier 10 pour permettre un accès par la trappe 32 du filtre à air, comme décrit en figure 1. Ils peuvent être placés dans une autre région choisie, par exemple en partie supérieure pour permettre alors un accès par la planche de bord.

La figure 6, à laquelle il a déjà été fait référence plus haut, montre le conduit d'admission 26 en cours de démontage pour permettre, dans l'exemple, le démontage du groupe moto-ventilateur 14. L'extraction de ce dernier, dans la direction axiale, peut s'effectuer manuellement en saisissant la turbine 18 située du côté de l'ouverture d'accès 24. Cependant, pour éviter tout risque d'endommagement de cette turbine, il est envisageable d'utiliser un outil d'extraction approprié 56 comme montré à la figure 7. Cet outil comprend une paroi cylindrique 58 munie d'une poignée diamétrale 60 et de tiges axiales 62, ici au nombre de trois, propres à s'engager dans le support moteur en traversant la turbine.

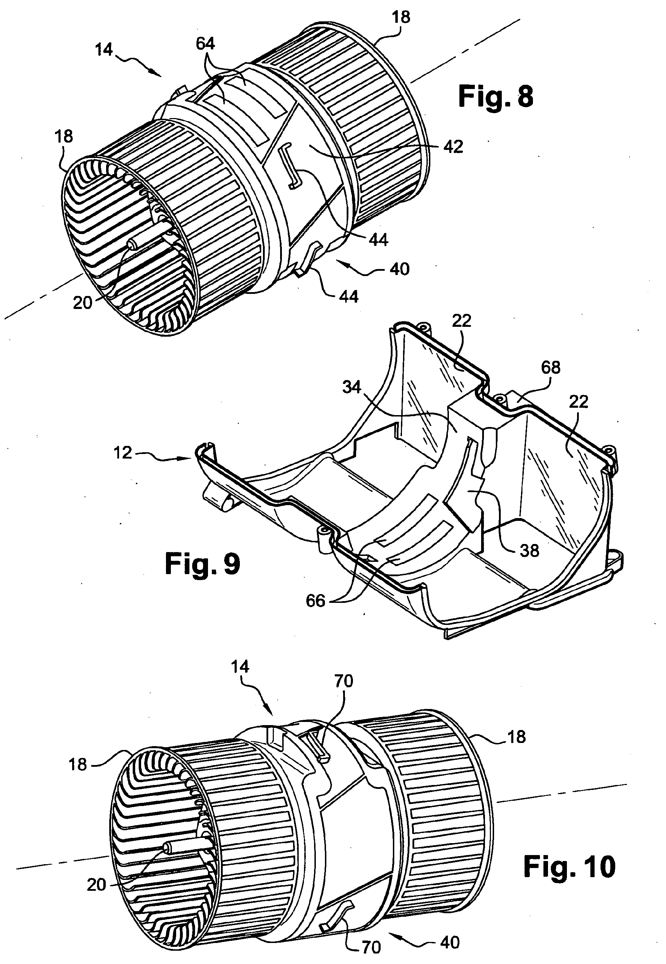

Il est fait référence maintenant à la figure 8 pour décrire le premier connecteur électrique 46 porté par le support moteur 40. Dans l'exemple, le connecteur électrique 46 comporte deux contacts électriques 64 du type frotteurs, réalisés sous la forme de deux bandes de contact en forme d'arc de cercle, disposées à proximité l'une de l'autre sur la paroi extérieure 42 du support moteur 40,et dans la direction axiale. On aperçoit également sur la figure 8 deux des ergots 44 assurant le verrouillage du support moteur dans l'enveloppe.

Les contacts 64 du type frotteurs sont propres à coopérer avec deux contacts 66, également du type frotteurs, disposés du côté intérieur de la paroi 36 de l'enveloppe. Ces contacts 66 sont également en forme d'arc de cercle et espacés dans la direction axiale. On aperçoit également sur la figure 9 une découpe 38, en forme de L, propre à coopérer avec un ergot 44. À partir des contacts électriques 66 du type frotteurs s'étend un faisceau électrique menant à un connecteur extérieur 68. Celui-ci est destiné à être relié à un circuit électrique d'alimentation approprié.

Ainsi, dans la forme de réalisation des figures 8 et 9, les fonctions respectives de verrouillage et de connection électrique sont assurées par des éléments différents.

En revanche, dans le cas de la figure 10, le support moteur porte deux contacts électriques mâles 70 du type à baïonnette, espacés angulairement entre eux, et propres à coopérer avec des contacts électriques femelles (non représentés) et également du type à baïonnette formés dans la partie réceptrice 34 de l'enveloppe 12. En ce cas, les connecteurs électriques respectifs du groupe moto-ventilateur 14 et de l'enveloppe 12 forment en même temps des moyens de verrouillage pour maintenir le groupe moto-ventilateur 14 dans sa position de montage à l'intérieur du boîtier 10.

L'invention est susceptible de nombreuses variantes de réalisation, notamment en ce qui concerne la structure des moyens de verrouillage et des moyens de connexion électrique du support moteur et de l'enveloppe.

L'invention trouve une application dans les dispositifs de chauffage, ventilation et/ou climatisation des véhicules automobiles.

## Revendications

1. Dispositif de chauffage, ventilation et/ou climatisation de véhicule automobile, comprenant un boîtier (10) délimitant une enveloppe (12), un groupe moto-ventilateur (14) propre à être reçu de manière amovible dans l'enveloppe (12) dans une position de montage, ce groupe moto-ventilateur (14) comprenant un moteur électrique (16) entraînant deux turbines (18) disposées suivant un axe (20) et de part et d'autre de celui-ci, ces turbines (18) étant propres à être reçues dans deux volutes (22), le boîtier (10) comportant une ouverture d'accès (24) située latéralement dans une région d'extrémité de l'enveloppe (12) et dans une direction de l'axe (20) des turbines (18) et du moteur électrique (16) pour le montage et le démontage du groupe moto-ventilateur (14) suivant la direction de l'axe (20),
**caractérisé en ce que** les deux volutes (22) sont formées dans l'enveloppe (12) du boîtier (10) qui délimite en outre une partie réceptrice (34), comprise entre les deux volutes (22) et comportant une paroi intérieure (36) de forme générale cylindrique circulaire, et propre à recevoir, dans la position de montage, un support moteur (40) de forme générale annulaire qui entoure le moteur électrique (16).

2. Dispositif selon la revendication 1, **caractérisé en ce que** l'ouverture d'accès (24) est formée dans une entrée d'air de l'une des deux volutes (22).

3. Dispositif selon la revendication 2, **caractérisé en ce que** l'entrée d'air de ladite volute (22) est munie d'un conduit d'admission d'air (26) réalisé démontable pour le montage ou démontage du groupe moto-ventilateur (14).

4. Dispositif selon l'une des revendications 2 et 3, **caractérisé en ce que** l'autre des deux volutes (22) est munie d'un autre conduit d'admission d'air (28) réalisé fixe.

5. Dispositif selon l'une des revendications 1 à 4, **caractérisé en ce que** la partie réceptrice (34) et le support moteur (40) comportent des moyens conjugués de verrouillage (38, 44) par coopération de forme.

6. Dispositif selon la revendication 5, **caractérisé en ce que** les moyens conjugués de verrouillage (38, 44) sont du type à baïonnette.

7. Dispositif selon l'une des revendications 5 et 6, **caractérisé en ce que** les moyens conjugués de verrouillage comprennent au moins un ergot (44) issu du support moteur (40) et propre à s'engager dans une découpe (38) aménagée dans une paroi intérieure (36) de la partie réceptrice (34).

8. Dispositif selon la revendication 7, **caractérisé en ce que** la découpe (38) est en forme de L.

9. Dispositif selon l'une des revendications 4 à 8, **caractérisé en ce que** le support moteur (40) comprend deux parties (40A, 40B) en forme de demi-anneau propres à être assemblées entre elles et autour d'une bague (50) entourant le moteur électrique.

10. Dispositif selon la revendication 9, **caractérisé en ce que** la bague (50) comporte des amortisseurs (54) surmoulés pour le montage du support moteur (50).

11. Dispositif selon l'une des revendications 1 à 10, **caractérisé en ce qu'**il comprend un premier connecteur électrique (46) porté par le support moteur (40) et un second connecteur électrique (48) porté par le boîtier (12) et propres à assurer une liaison électrique lorsque le groupe moto-ventilateur (14) est dans la position de montage à l'intérieur du boîtier.

12. Dispositif selon la revendication 11, **caractérisé en ce que** le premier connecteur électrique (46) et le second connecteur électrique (48) comprennent des contacts électriques (34, 66) du type frotteur.

13. Dispositif selon la revendication 11, **caractérisé en ce que** le premier connecteur électrique comprend au moins un contact électrique mâle (70) du type à baïonnette, tandis que le second connecteur électrique comprend au moins un contact électrique femelle du type à baïonnette.

14. Dispositif selon l'une des revendications 11 ou 12, **caractérisé en ce que** le premier connecteur électrique (70) et le second connecteur électrique forment en même temps des moyens de verrouillage pour maintenir le groupe moto-ventilateur dans la position de montage à l'intérieur du boîtier.

## Claims

1. Motor vehicle heating, ventilating and/or air conditioning device comprising a housing (10) delimiting a casing (12), a motor-fan unit (14) that can be housed removably in the casing (12) in a mounted position, this motor-fan unit (14) comprising an electric motor (16) driving two blower wheels (18) arranged along an axle (20) and at each end thereof, these blower wheels (18) being able to be housed in two blower housings (22), the housing (10) comprising an access opening (24) situated laterally in an end region of the casing (12) and in a direction of the axle (20) of the blower wheels (18) and of the electric motor (16) so that the motor-fan unit (14) can be fitted and removed in the direction of the axle (20), **characterized in that** the two blower housings (22) are formed in the casing (12) of the housing (10) which further delimits a receiving part (34), comprised between the two blower housings (22) and comprising an interior wall (36) of circular cylindrical overall shape and able, in the mounted position, to receive a motor support (40) of annular overall shape which surrounds the electric motor (16).

2. Device according to Claim 1, **characterized in that** the access opening (24) is formed in an air inlet of one of the two blower housings (22).

3. Device according to Claim 2, **characterized in that** the air inlet of the said blower housing (22) is equipped with an air intake canal (26) produced such that it can be removed for the fitting or removal of the motor-fan unit (14).

4. Device according to one of Claims 2 and 3, **characterized in that** the other of the two blower housings (22) is equipped with another air intake canal (28) produced such that it is fixed.

5. Device according to one of Claims 1 to 4, **characterized in that** the receiving part (34) and the motor support (40) comprise mating means (38, 44) for locking through interaction of shape.

6. Device according to Claim 5, **characterized in that** the mating locking means (38, 44) are of the bayonet type.

7. Device according to one of Claims 5 and 6, **characterized in that** the mating locking means comprise at least one pin (44) extending from the motor support (40) and able to engage in a cutout (38) created in an interior wall (36) of the receiving part (34).

8. Device according to Claim 7, **characterized in that** the cutout (38) is L-shaped.

9. Device according to one of Claims 4 to 8, **characterized in that** the motor support (40) comprises two parts (40A, 40B) in the shape of a half annulus which can be assembled with one another and around a ring (50) that surrounds the electric motor.

10. Device according to Claim 9, **characterized in that** the ring (50) comprises overmoulded absorbers (54) for mounting the motor support (50).

11. Device according to one of Claims 1 to 10, **characterized in that** it comprises a first electrical connector (46) borne by the motor support (40) and a second electrical connector (48) borne by the housing (12), which connectors are able to provide an electrical connection when the motor-fan unit (14) is in the mounted position inside the housing.

12. Device according to Claim 11, **characterized in that** the first electrical connector (46) and the second electrical connector (48) comprise electrical contacts (34, 66) of the wiper type.

13. Device according to Claim 11, **characterized in that** the first electrical connector comprises at least one male electrical contact (70) of the bayonet type, whereas the second electrical connector comprises at least one female electrical contact of the bayonet type.

14. Device according to one of Claims 11 and 12, **characterized in that** the first electrical connector (70) and the second electrical connector at the same time form locking means to keep the motor-fan unit in the mounted position inside the housing.

## Patentansprüche

1. Kraftfahrzeug-Heizungs-, Belüftungs- und/oder Klimaeinrichtung, die ein eine Hülle (12) begrenzendes Gehäuse (10) und eine Gebläseeinheit (14) enthält, die in einer Montagestellung entfernbar in der Hülle (12) aufgenommen werden kann, wobei diese Gebläseeinheit (14) einen Elektromotor (16) enthält, der zwei Turbinen (18) antreibt, die gemäß einer Achse (20) und zu deren beiden Seiten angeordnet sind, wobei diese Turbinen (18) in zwei Turbinengehäusen (22) aufgenommen werden können, wobei das Gehäuse (10) eine Zugangsöffnung (24) aufweist, die sich seitlich in einem Endbereich der Hülle (12) und in einer Richtung der Achse (20) der Turbinen (18) und des Elektromotors (16) für den Ein- und Ausbau der Gebläseeinheit (14) in Richtung der Achse (20) befindet,
**dadurch gekennzeichnet, dass** die zwei Turbinengehäuse (22) in der Hülle (12) des Gehäuses (10) geformt sind, die außerdem einen Aufnahmebereich (34) begrenzt, der sich zwischen den zwei Turbinengehäusen (22) befindet, eine Innenwand (36) von allgemeiner Kreiszylinderform aufweist und geeignet ist, um in der Einbaustellung einen allgemein ringförmigen Motorträger (40) aufzunehmen, der den Elektromotor (16) umgibt.

2. Vorrichtung nach Anspruch 1, **dadurch gekennzeichnet, dass** die Zugangsöffnung (24) in einem Lufteintritt eines der zwei Turbinengehäuse (22) geformt ist.

3. Vorrichtung nach Anspruch 2, **dadurch gekennzeichnet, dass** der Lufteintritt des Turbinengehäuses (22) mit einem Luftansaugkanal (26) versehen ist, der für den Ein- oder Ausbau der Gebläseeinheit (14) ausbaubar hergestellt ist.

4. Vorrichtung nach einem der Ansprüche 2 und 3, **dadurch gekennzeichnet, dass** das andere der zwei Turbinengehäuse (22) mit einem weiteren Luftansaugkanal (28) versehen ist, der ortsfest hergestellt ist.

5. Vorrichtung nach einem der Ansprüche 1 bis 4, **dadurch gekennzeichnet, dass** der Aufnahmebereich (34) und der Motorträger (40) durch Form-Zusammenwirkung gekoppelte Verriegelungseinrichtungen (38, 44) aufweisen.

6. Vorrichtung nach Anspruch 5, **dadurch gekennzeichnet, dass** die gekoppelten Verriegelungseinrichtungen (38, 44) vom Bajonett-Typ sind.

7. Vorrichtung nach einem der Ansprüche 5 und 6, **dadurch gekennzeichnet, dass** die gekoppelten Verriegelungseinrichtungen mindestens einen Stift (44) enthalten, der aus dem Motorträger (40) hervorgeht und geeignet ist, um sich in einen Ausschnitt (38) einzufügen, der in einer Innenwand (36) des Aufnahmebereichs (34) ausgespart ist.

8. Vorrichtung nach Anspruch 7, **dadurch gekennzeichnet, dass** der Ausschnitt (38) L-förmig ist.

9. Vorrichtung nach einem der Ansprüche 4 bis 8, **dadurch gekennzeichnet, dass** der Motorträger (40) zwei halbringförmige Teile (40A, 40B) aufweist, die miteinander und um einen Ring (50) herum zusammengesetzt werden können, der den Elektromotor umgibt.

10. Vorrichtung nach Anspruch 9, **dadurch gekennzeichnet, dass** der Ring (50) aufgeformte Dämpfer (54) für den Einbau des Motorträgers (50) aufweist.

11. Vorrichtung nach einem der Ansprüche 1 bis 10, **dadurch gekennzeichnet, dass** sie einen ersten vom Motorträger (40) getragenen elektrischen Verbinder (46) und einen zweiten vom Gehäuse (12) getragenen elektrischen Verbinder (48) aufweist, die geeignet sind, um eine elektrische Verbindung zu gewährleisten, wenn die Gebläseeinheit (14) in der Einbaustellung im Inneren des Gehäuses ist.

12. Vorrichtung nach Anspruch 11, **dadurch gekennzeichnet, dass** der erste elektrische Verbinder (46) und der zweite elektrische Verbinder (48) elektrische Kontakte (34, 66) vom Typ Gleitkontakt enthalten.

13. Vorrichtung nach Anspruch 11, **dadurch gekennzeichnet, dass** der erste elektrische Verbinder mindestens einen elektrischen Einsteckkontakt (70) vom Bajonett-Typ enthält, während der zweite elektrische Verbinder mindestens einen elektrischen Aufnahmekontakt vom Bajonett-Typ enthält.

14. Vorrichtung nach einem der Ansprüche 11 oder 12, **dadurch gekennzeichnet, dass** der erste elektrische Verbinder (70) und der zweite elektrische Verbinder gleichzeitig Verriegelungseinrichtungen bilden, um die Gebläseeinheit in der Einbaustellung im Inneren des Gehäuses zu halten.
